# EUROPÄISCHE PATENTSCHRIFT

(11) **EP 4 663 156 B1**
(45) Veröffentlichungstag und Bekanntmachung des Hinweises auf die Patenterteilung: **02.09.2026**
(21) Anmeldenummer: 24181171.0
(22) Anmeldetag: 10.06.2024
(51) Int. Cl.: A61C 5/77, A61C 13/00, B33Y 10/00, B33Y 80/00, B29C 64/10, B29C 64/40

(54) **VERFAHREN ZUM HERSTELLEN EINES DENTALOBJEKTS**
METHOD FOR PRODUCING A DENTAL OBJECT
PROCÉDÉ DE FABRICATION D'UN OBJET DENTAIRE

(43) Veröffentlichungstag der Anmeldung: 17.12.2025
(73) Patentinhaber: Ivoclar Vivadent AG, 9494 Schaan (LI)
(72) Erfinder: Bitar, Nicola, 9462 Montlingen (CH); Reinhardt, Jonas, 7206 Igis (CH); Ritzberger, Christian, 9472 Grabs (CH); Schülke, Andreas, 9472 Grabs (CH)
(74) Vertreter: Baldus, Oliver

(56) Entgegenhaltungen:
- WO-A1-2022/253429
- WO-A1-2023/154178
- CN-A- 115 519 794
- US-A1- 2023 225 830

## Beschreibung

Die vorliegende Erfindung betrifft ein Verfahren zum Herstellen eines Dentalobjektes und einen Drucker zum Herstellen des Dentalobjektes.

Beim dreidimensionalen Drucken (3D-Drucken) kann ein Bauteil leicht durch nachträgliche Bearbeitungsschritte beschädigt werden. Dies ist beispielsweise dann der Fall, wenn das Bauteil von der Bauplattform des Druckers entfernt wird und danach weitere Bearbeitungsschritte von Hand durchgeführt werden. Beispielsweise wird die Oberfläche nachgearbeitet, damit die Rauheit minimiert werden kann. Wenn das Bauteil im ungesinterten Zustand poliert wird, kann es zu mechanischen Beschädigungen des Bauteils kommen. Es können Risse entstehen, so dass nach einem Sintern keine ausreichende Festigkeit erreicht wird.

Beim Entbindern und Sintern des Bauteils entsteht das Problem, dass sich das Bauteil verzieht, da die Auflagefläche ungleich verteilt ist und sich Verformungen des Bauteils ergeben. Grundsätzlich lassen sich filigrane Bauteile daher schlecht von Hand bearbeiten, da diese im Grünzustand zerbrechlich sind. Die Bauteile haben im ungesinterten Zustand im Allgemeinen schlechte mechanische Eigenschaften.

Zum nachträglichen Bearbeiten wird normalerweise Abformmaterial oder Kit verwendet, damit das hergestellte Bauteil nachbearbeitet werden kann. Beispielsweise werden beim Fräsen erzeugte Stege oder beim 3D-Drucken erzeugte Unterstützungen entfernt.

Die Druckschrift CN 115 519 794 A betrifft ein Verfahren zum Erzeugen eines 3D-Druckmodels. Die Druckteile sind mit einem Verbindungsrahmen (Connecting Frame) verbunden, der einen Körper (Body) und eine Vielzahl von Verbindungsteilen (Connecting Parts) umfasst. Die Verbindungsteile und der Körper können in der Form eines Blattes oder eine Platte vorliegen.

Die Druckschrift US 2023/225830 A1 betrifft die Herstellung kieferorthopädischer Geräte. Eine Platzierung der Stützstrukturen und der Gelenke ist so, dass die Noppen an der kieferorthopädischen Vorrichtung verbleiben, wenn die kieferorthopädische Vorrichtung von der Basis entfernt wird.

Die Druckschrift WO2023/154178 A1 betrifft kieferorthopädische Vorrichtungen. Die kieferorthopädische Vorrichtung wird auf einer Basis positioniert. Die kieferorthopädische Vorrichtung umfasst eine Klebeschale, Stützstrukturen und kieferorthopädische Geräte. Die kieferorthopädischen Geräte werden über die ersten Stützstrukturen 306 an der Klebeschale befestigt. Die kieferorthopädische Vorrichtung wird durch weitere Stützstrukturen auf der Basis gestützt.

Es ist die technische Aufgabe der vorliegenden Erfindung, die Herstellung eines Dentalobjektes mittels 3D-Druck zu vereinfachen.

Diese technische Aufgabe wird durch Gegenstände nach den unabhängigen Ansprüchen gelöst. Technisch vorteilhafte Ausführungsformen sind Gegenstand der abhängigen Ansprüche, der Beschreibung und der Zeichnungen.

Gemäß einem ersten Aspekt wird die technische Aufgabe durch ein Verfahren zum Herstellen eines Dentalobjektes gelöst, mit den Schritten eines Druckens eines Unterbaus; eines Druckens einer Zwischenschicht aus einem Unterstützungsmaterial auf dem Unterbau; und eines Druckens des Dentalobjektes aus dem Herstellungsmaterial für das Dentalobjekt auf der Zwischenschicht. Das Unterstützungsmaterial umfasst ein wasserlösliches Unterstützungsmaterial, ein Wachs und/oder ein nicht-ionisches Tensid umfasst. Eine Form einer Aussparung im Dentalobjekt entspricht der Form des Unterbaus und das Unterstützungsmaterial dringt nach dem Drucken in das Dentalobjekt ein und/oder das Dentalobjekt wird zusammen mit dem Unterbau gesintert.

Dieses Verfahren ermöglicht es, dass dünnere Dentalobjekte gefertigt werden können, wie beispielsweise ultradünne Veneers. Eine Nachbearbeitung kann aufgrund des zuvor gedruckten Unterbaus erheblich verbessert werden, auf dem das Dentalobjekt aufliegt. Vor dem Sintern kann das Dentalobjekt poliert werden. Durch das Verfahren wird beispielsweise der technische Vorteil erreicht, dass sich eine große Auflagefläche zwischen dem Dentalobjekt und dem Unterbau ergibt.

Zudem wird der technische Vorteil erreicht, dass die Festigkeit des Dentalobjekts erhöht wird. Durch das in der porösen Matrix des Herstellungsmaterials aufgenommene Unterstützungsmaterial wird zudem erreicht, dass sich das Dentalobjekt besser schleifen und polieren lässt, so dass automatisch eine glattere Oberfläche erzeugt werden kann. Dadurch wird beispielsweise der technische Vorteil erreicht, dass ein Sinterverzug oder eine Verformung des Dentalobjektes beim Sintern verringert werden kann.

In einer technisch vorteilhaften Ausführungsform des Verfahrens umfasst das Herstellungsmaterial für das Dentalobjekt ein Oxidkeramik-Material. Dadurch wird beispielsweise der technische Vorteil erreicht, dass ein besonders geeignetes Herstellungsmaterial verwendet wird.

In einer weiteren technisch vorteilhaften Ausführungsform des Verfahrens beträgt eine Dicke der Zwischenschicht 0,05 mm bis 2 mm. Dadurch wird beispielsweise der technische Vorteil erreicht, dass eine gute Anpassung zwischen Dentalobjekt und Unterbau erreicht wird.

In einer weiteren technisch vorteilhaften Ausführungsform des Verfahrens wird der Unterbau mit einem inneren Hohlraum gedruckt. Dadurch wird beispielsweise der technische Vorteil erreicht, dass Material zum Aufbau des Unterbaus eingespart werden kann.

In einer weiteren technisch vorteilhaften Ausführungsform des Verfahrens wird der Hohlraum des Unterbaus mit Unterstützungsmaterial gefüllt. Dadurch wird beispielsweise der technische Vorteil erreicht, dass sich die Festigkeit des hohlen Unterbaus erhöht.

In einer weiteren technisch vorteilhaften Ausführungsform des Verfahrens beträgt eine Dicke der Wand des Unterbaus, die den Hohlraum umgibt, zwischen 1 mm und 3 mm. Dadurch wird beispielsweise der technische Vorteil erreicht, dass der Unterbau eine hohe Stabilität aufweist.

In einer weiteren technisch vorteilhaften Ausführungsform des Verfahrens wird der Unterbau mit einer Werkzeugschnittstelle gedruckt. Dadurch wird beispielsweise der technische Vorteil erreicht, dass eine Handhabung des Dentalobjektes verbessert wird.

In einer weiteren technisch vorteilhaften Ausführungsform des Verfahrens wird der Unterbau aus dem Herstellungsmaterial für das Dentalobjekt gedruckt. Dadurch wird beispielsweise der technische Vorteil erreicht, dass der Druck mit einer geringen Anzahl unterschiedlicher Materialien durchgeführt werden kann. Zudem braucht kein zusätzlicher Druckkopf verbaut zu werden, so dass der 3D-Drucker mit einem geringeren Aufwand hergestellt werden kann.

In einer weiteren technisch vorteilhaften Ausführungsform des Verfahrens wird das Unterstützungsmaterial nach dem Drucken entfernt. Dadurch wird beispielsweise der technische Vorteil erreicht, dass das Dentalobjekt formschlüssig auf dem Unterbau aufliegen kann.

In einer weiteren technisch vorteilhaften Ausführungsform des Verfahrens wird das Unterstützungsmaterial nach dem Drucken geschmolzen. Dadurch wird beispielsweise der technische Vorteil erreicht, dass das Unterstützungsmaterial auf einfache Weise entfernt werden kann.

Gemäß einem zweiten Aspekt wird die technische Aufgabe durch einen Drucker nach Anspruch 11 gelöst. Dadurch werden die gleichen technischen Vorteile wie durch die entsprechenden Merkmale des Verfahrens nach dem ersten Aspekt erreicht.

Gemäß einem dritten Aspekt wird die technische Aufgabe durch ein Computerprogramm nach Anspruch 12 gelöst.

Dadurch werden die gleichen technischen Vorteile wie durch die entsprechenden Merkmale des Verfahrens nach dem ersten Aspekt erreicht.

Ausführungsbeispiele der Erfindung sind in den Zeichnungen dargestellt und werden im Folgenden näher beschrieben.

Es zeigen:
- Fig. 1: eine schematische Ansicht eines gedruckten Dentalobjektes;
- Fig. 2: eine schematische Ansicht eines gedruckten Dentalobjektes; und
- Fig. 3: ein Blockdiagramm eines Verfahrens zum Herstellen eines Dentalobjektes.

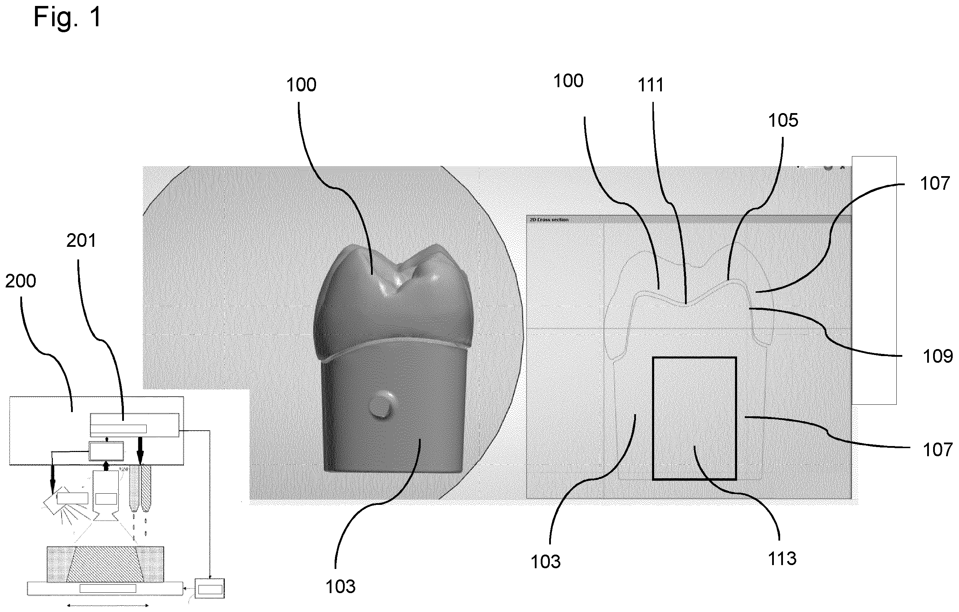

Fig. 1 zeigt eine schematische Ansicht eines gedruckten Dentalobjektes 100, das durch eine Krone gebildet ist. Das Dentalobjekt 100 wird mittels eines dreidimensionalen Druckverfahrens mittels eines beweglichen Druckkopfes schichtweise gedruckt. Zum Drucken des Dentalobjektes 100 mit dem Unterbau 103 und der Zwischenschicht 105 kann ein 3D-Drucker 200 mit einem elektronischen Steuergerät 201 verwendet werden, der die einzelnen Komponenten schichtweise aufbaut. Das Steuergerät 201 umfasst einen Mikroprozessor zum Ausführen eines Computerprogramms, das den Drucker 200 und dessen Komponenten steuert.

Dabei wird unter dem Dentalobjekt 100 ein räumlich angepasster Unterbau 103 gedruckt. Dieser mitgedruckte Unterbau 103 wird aus dem gleichen Herstellungsmaterial 107 wie das Dentalobjekt 100 gedruckt. Alternativ kann ein anderes Material für den Druck des Unterbaus 103 verwendet werden.

Der Unterbau 103 kann die Form eines verbleibenden stumpfförmigen Teils eines natürlichen Zahns aufweisen, nachdem dieser beschädigt oder behandelt wurde, um Platz für eine Zahnkrone, eine Brücke oder einen anderen Zahnersatz zu schaffen. Der verbleibende Zahn dient als Grundlage für den neuen Zahnersatz, der über diesem platziert wird. Die Funktion des verbleibenden Zahns besteht darin, eine stabile und feste Basis für den Zahnersatz zu bieten und gleichzeitig die natürliche Ästhetik und Funktion des Gebisses wiederherzustellen. Der Zahnarzt oder Zahntechniker formt und präpariert den verbleibenden Zahn, damit der Zahnersatz sicher darauf platziert werden kann.

Zwischen dem Dentalobjekt 100 und dem Unterbau 103 wird eine dünne Zwischenschicht aus einem Unterstützungsmaterial 109 gedruckt. Die Dicke der Zwischenschicht beträgt beispielsweise 0,05 mm bis 2 mm und kann anschließend entfernt werden. Das Unterstützungsmaterial 109 ist beispielsweise ein wasserlösliches Unterstützungsmaterial, ein Wachs und/oder ein nicht-ionisches Tensid. Der Unterbau 103 kann mit einem inneren Hohlraum 113 gedruckt werden, der ebenfalls mit Unterstützungsmaterial gefüllt wird.

Je nach ihrer Herkunft werden Wachse in drei Hauptgruppen eingeteilt, nämlich natürliche Wachse, chemisch modifizierte Wachse und synthetische Wachse. Bei den natürlichen Wachsen wird wiederum zwischen pflanzlichen und tierischen Wachsen, Mineralwachsen und petrochemischen Wachsen unterschieden.

In der vorliegenden Erfindung werden bevorzugt petrochemische Wachse, wie beispielsweise Paraffinwachs (Hartparaffin), Petrolatum, Mikrowachs (Mikroparaffin) und deren Mischungen, besonders bevorzugt Paraffinwachs verwendet. Auch pflanzliche Wachse, z.B. Candelillawachs, Carnaubawachs, Japanwachs, Espartograswachs, Korkwachs, Guarumawachs, Reiskeimölwachs, Zuckerrohrwachs, Ouricurywachs, Montanwachs; tierische Wachse, wie beispielsweise Bienenwachs, Schellakwachs, Walrat, Lanolin (Wollwachs), Bürzelfett; Mineralwachse, wie beispielsweise Ceresin, Ozokerit (Erdwachs); chemisch modifizierte Wachse, wie beispielsweise Montanesterwachse, Sasolwachse, hydrierte Jojobawachse, oder synthetische Wachse, wie beispielsweise Polyalkylenwachse, Polyethylenglykolwachse, können verwendet werden.

Nicht-ionische Tenside sind beispielsweise Fettalkoholethoxylate, Fettalkoholpropoxylate, Alkylglucoside, Alkylpolyglucoside, Oktylphenoethoxylate, Nonylphenoethoxylate.

Nach Beendigung des Drucks wird das Unterstützungsmaterial 109 wieder entfernt. Dabei schwindet der Zwischenraum zwischen dem Dentalobjekt 100 und dem Unterbau 103. Das Dentalobjekt 100 liegt danach formpassend auf dem Unterbau 103 auf. Dies hat den Vorteil, dass die Krafteinwirkung bei einer Handhabung über die gesamte Kontaktfläche verteilt wird und die mechanischen Eigenschaften verbessert werden. Eine Beschädigung bei der Handhabung des Dentalobjektes 100 kann verringert werden. Dies ist der Fall, da das Dentalobjekt 100 eine große Auflagefläche auf dem Unterbau 103 hat, sodass keine punktuellen Belastungen entstehen.

Üblicherweise wird die Vorderseite des Dentalobjektes 100 noch einmal vorpoliert, so dass im gesinterten Zustand weniger Zeit für eine Politur aufgewendet werden muss. Die Zeit zum Polieren kann durch das Verfahren um den Faktor 4 verringert werden. Die Ausschussrate kann halbiert werden. Diese Vorteile ergeben sich aber für alle hergestellten Dentalobjekte 100, die nach dem Drucken noch einmal bearbeitet oder erwärmt werden.

Auch für einen Brennvorgang ist der mitgedruckte Unterbau 103 von großem Vorteil, da sich ein Verzug des Dentalobjektes 100 minimieren lässt. Die Auflagefläche ist konstant und gleichmäßig verteilt, so dass die Auflagebelastung pro Quadratzentimeter verringert wird. Dadurch verringert sich ebenfalls der Verzug beim Sintern oder Kristallisieren, wie bei Lithiumdisilikat.

Der Vorteil dieses Verfahrens ist, dass beim Drucken keine Zeit verloren geht. Es macht zeitlich keinen Unterschied, ob unter dem Dentalobjekt 100 ein Unterbau 103 oder Unterstützungsmaterial 109 gedruckt wird. Insgesamt wird nicht mehr Zeit für das Drucken des Dentalobjektes 100 benötigt.

Ein weiterer Vorteil ist, dass in den Unterbau 103 ein Werkzeugadapter gedruckt werden kann, so dass eine Aufnahme in ein Werkzeug oder ein Eingriff eines Werkzeugs möglich ist. Der Unterbau 103 umfasst zu diesem Zweck beispielsweise eine entsprechend geformte Aussparung als Werkzeugschnittstelle. Dadurch kann der Unterbau 103 in ein Werkzeug gespannt oder gesteckt werden, so dass das Dentalobjekt 100 sicher und einfach poliert werden kann. Auch eine Nachbearbeitung in einer automatisierten Maschine ist möglich, wie zum Beispiel in einer CNC-Maschine oder einer Trowalisier-Poliermaschine.

Alternativ ist es auch möglich, den Unterbau 103 innen hohl zu drucken und mit einer bestimmten Wandstärke von beispielsweise 1 mm bis 3 mm auszustatten. Dadurch kann Herstellungsmaterial 107 eingespart werden. Der entstehende Hohlraum kann dann mit Unterstützungsmaterial 109 gedruckt und ausgefüllt werden. Um Material für den Unterbau 103 zu sparen, füllt der Unterbau 103 lediglich die Aussparung 111 des Dentalobjektes 100 aus, und weist keine zusätzliche Bauhöhe unterhalb des Dentalobjektes 100 in der vertikalen Richtung auf. Durch den Unterbau 103 wird eine Verbesserung der Nachbearbeitung von Hand und eine Verringerung des Sinterverzuges des Dentalobjektes 100 erreicht. Eine Nacharbeit ist vor einem Brennen bei dünnen Dentalobjekten 100 nur schwer möglich. Ohne Unterbau können bestimmte Dentalobjekte 100 nicht bearbeitet werden, da diese beim Vorpolieren zerbrechen.

Das Herstellen von Dentalobjekten 100, wie beispielsweise zahntechnischen Restaurationen oder Prothesen, mittels 3D-Druck wird hierdurch vereinfacht. Die Zwischenschicht 105 dient dazu, einen Sinterverzug zu verhindern und ein Polieren von dünnwandigen Dentalobjekten 100 zu ermöglichen.

Durch das Verfahren können dünnere Dentalobjekte 100 mit geringerem Sinterverzug gesintert werden. Unterschiedliche Materialkompositionen haben bei diesem Verfahren keinen Einfluss. Der geringere Sinterverzug ist darauf zurückzuführen, dass der Unterbau 103 die gleiche geometrische Form wie das Dentalobjekt 100 aufweist. Dadurch entsteht eine große Auflagefläche mit geringen punktuellen Belastungen.

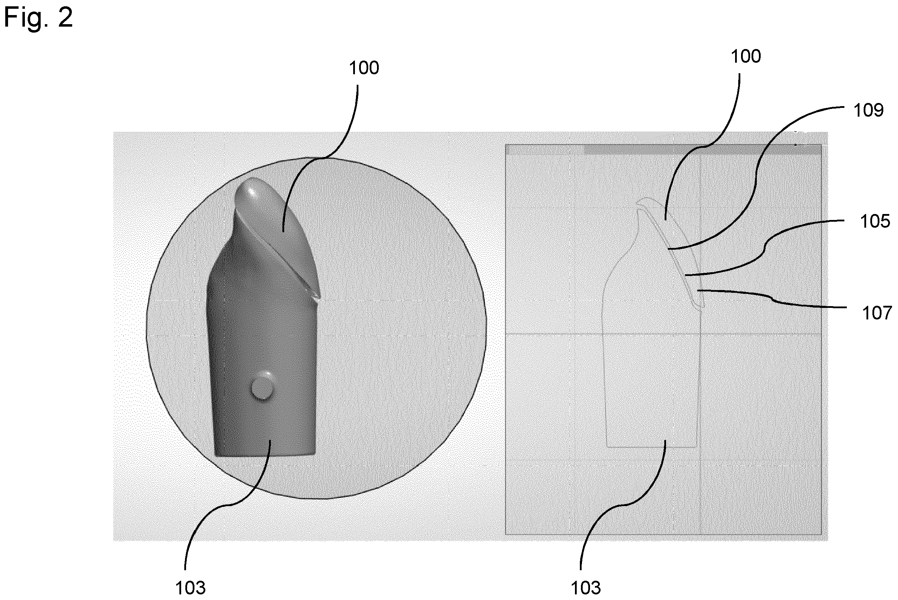

Fig. 2 zeigt eine schematische Ansicht eines weiteren gedruckten Dentalobjektes 100, das durch ein Veneer gebildet ist. Das Dentalobjekt 100 kann zusammen mit dem gedruckten Unterbau 103 bewegt und gehandhabt werden. Durch die Auflagefläche zwischen Dentalobjekt 100 und Unterbau 103 können Kräfte übertragen werden, ohne dass es hierbei zu Beschädigungen des Dentalobjektes 100 kommt.

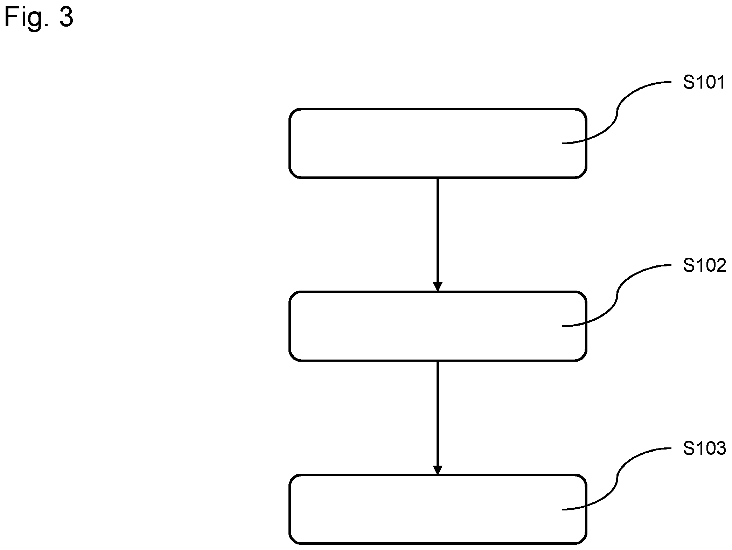

Fig. 3 zeigt ein Blockdiagramm eines Verfahrens zum Herstellen des Dentalobjektes 100. Das Verfahren umfasst den Schritt S101 eines Druckens des Unterbaus 103. Im Schritt S102 wird die Zwischenschicht 105 aus dem Unterstützungsmaterial 109 auf dem Unterbau 103 gedruckt. In Schritt S103 wird das Dentalobjekt 100 aus dem Herstellungsmaterial 107 für das Dentalobjekt 100 auf der Zwischenschicht 105 gedruckt. Die einzelnen Schritte S101 bis S103 können im Rahmen eines schichtweisen Druckens gleichzeitig durchgeführt werden.

Mit dem Verfahren können dünnere und filigranere Dentalobjekte 100 gedruckt werden, die durch den Unterbau 103 anschließend einfacher handhabbar und polierbar sind. Das Herstellen der Dentalobjekte 100, wie beispielsweise zahntechnischen Restaurationen oder Prothesen, mittels eines 3D-Druckverfahrens wird hierdurch vereinfacht und ein Aufwand verringert.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Alle Verfahrensschritte können durch Vorrichtungen implementiert werden, die zum Ausführen des jeweiligen Verfahrensschrittes geeignet sind. Alle Funktionen, die von gegenständlichen Merkmalen ausgeführt werden, können ein Verfahrensschritt eines Verfahrens sein.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Dentalobjekt
- 103: Unterbau
- 105: Zwischenschicht
- 107: Herstellungsmaterial
- 109: Unterstützungsmaterial
- 111: Aussparung
- 113: Hohlraum

- 200: Drucker
- 201: Steuergerät

## Patentansprüche

1. Verfahren zum Herstellen eines Dentalobjektes (100), mit den Schritten:
- Drucken (S101) eines Unterbaus (103);
- Drucken (S102) einer Zwischenschicht (105) aus einem Unterstützungsmaterial (109) auf dem Unterbau (103); und
- Drucken (S103) des Dentalobjektes (100) aus dem Herstellungsmaterial (107) für das Dentalobjekt (100) auf der Zwischenschicht (105),
**dadurch gekennzeichnet, dass**
das Unterstützungsmaterial (109) ein wasserlösliches Unterstützungsmaterial, ein Wachs und/oder ein nicht-ionisches Tensid umfasst;
eine Form einer Aussparung (111) im Dentalobjekt (100) der Form des Unterbaus (103) entspricht; und
das Unterstützungsmaterial (109) nach dem Drucken in das Dentalobjekt (100) eindringt und/oder das Dentalobjekt (100) zusammen mit dem Unterbau (103) gesintert wird.

2. Verfahren nach Anspruch 1, wobei das Herstellungsmaterial (107) für das Dentalobjekt (100) ein Oxidkeramik-Material umfasst.

3. Verfahren nach einem der vorangehenden Ansprüche, wobei eine Dicke der Zwischenschicht 0,05 mm bis 2 mm beträgt.

4. Verfahren nach einem der vorangehenden Ansprüche, wobei der Unterbau (103) mit einem inneren Hohlraum (113) gedruckt wird.

5. Verfahren nach Anspruch 4, wobei der Hohlraum (113) des Unterbaus (103) mit Unterstützungsmaterial (109) gefüllt wird.

6. Verfahren nach Anspruch 4 oder 5, wobei eine Dicke der Wand des Unterbaus (103), die den Hohlraum (113) umgibt, zwischen 1 mm und 3 mm beträgt.

7. Verfahren nach einem der vorangehenden Ansprüche, wobei der Unterbau (103) mit einer Werkzeugschnittstelle gedruckt wird.

8. Verfahren nach einem der vorangehenden Ansprüche, wobei der Unterbau (103) aus dem Herstellungsmaterial (107) für das Dentalobjekt (100) gedruckt wird.

9. Verfahren nach einem der vorangehenden Ansprüche, wobei das Unterstützungsmaterial (109) nach dem Drucken entfernt wird.

10. Verfahren nach einem der vorangehenden Ansprüche, wobei das Unterstützungsmaterial (109) nach dem Drucken geschmolzen wird.

11. Drucker (200) zum Durchführen eines Verfahrens zum Herstellen eines Dentalobjektes (100), mit den Schritten:
- Drucken (S101) eines Unterbaus (103);
- Drucken (S102) einer Zwischenschicht (105) aus einem Unterstützungsmaterial (109) auf dem Unterbau (103); und
- Drucken (S103) des Dentalobjektes (100) aus dem Herstellungsmaterial (107) für das Dentalobjekt (100) auf der Zwischenschicht (105), **dadurch gekennzeichnet, dass** das Unterstützungsmaterial (109) ein wasserlösliches Unterstützungsmaterial, ein Wachs und/oder ein nicht-ionisches Tensid umfasst und eine Form einer Aussparung (111) im Dentalobjekt (100) der Form des Unterbaus (103) entspricht.

12. Computerprogramm, umfassend Befehle, die bei der Ausführung des Computerprogramms durch einen Drucker (200) mit einem Steuergerät (201) diesen veranlassen, ein Verfahren zum Herstellen eines Dentalobjektes (100), mit den Schritten:
- Drucken (S101) eines Unterbaus (103);
- Drucken (S102) einer Zwischenschicht (105) aus einem Unterstützungsmaterial (109) auf dem Unterbau (103); und
- Drucken (S103) des Dentalobjektes (100) aus dem Herstellungsmaterial (107) für das Dentalobjekt (100) auf der Zwischenschicht (105), **dadurch gekennzeichnet, dass** das Unterstützungsmaterial (109) ein wasserlösliches Unterstützungsmaterial, ein Wachs und/oder ein nicht-ionisches Tensid umfasst und eine Form einer Aussparung (111) im Dentalobjekt (100) der Form des Unterbaus (103) entspricht, auszuführen.

## Claims

1. A method of producing a dental object (100), comprising the steps of:
- printing (S101) a substructure (103);
- printing (S102) an intermediate layer (105) from a support material (109) on the substructure (103); and
- printing (S103) the dental object (100) from the production material (107) for the dental object (100) on the intermediate layer (105),
**characterized in that**
the support material (109) comprises a water-soluble support material, a wax and/or a non-ionic surfactant;
a shape of a recess (111) in the dental object (100) corresponds to the shape of the substructure (103); and
the support material (109) penetrates into the dental object (100) after printing and/or the dental object (100) is sintered together with the substructure (103).

2. The method according to claim 1, wherein the production material (107) for the dental object (100) comprises an oxide ceramic material.

3. The method according to any one of the preceding claims, wherein a thickness of the intermediate layer is 0.05 mm to 2 mm.

4. The method according to any one of the preceding claims, wherein the substructure (103) is printed with an inner cavity (113).

5. The method according to claim 4, wherein the cavity (113) of the substructure (103) is filled with support material (109).

6. The method according to claim 4 or 5, wherein a thickness of the wall of the substructure (103) surrounding the cavity (113) is between 1 mm and 3 mm.

7. The method according to any one of the preceding claims, wherein the substructure (103) is printed with a tool interface.

8. The method according to any one of the preceding claims, wherein the substructure (103) is printed from the production material (107) for the dental object (100).

9. The method according to any one of the preceding claims, wherein the support material (109) is removed after printing.

10. The method according to any one of the preceding claims, wherein the support material (109) is melted after printing.

11. A printer (200) for performing a method of producing a dental object (100), comprising the steps of:
- printing (S101) a substructure (103);
- printing (S102) an intermediate layer (105) from a support material (109) on the substructure (103); and
- printing (S103) the dental object (100) from the production material (107) for the dental object (100) on the intermediate layer (105), **characterized in that** the support material (109) comprises a water-soluble support material, a wax and/or a non-ionic surfactant and a shape of a recess (111) in the dental object (100) corresponds to the shape of the substructure (103).

12. A computer program, comprising instructions which, when the computer program is executed by a printer (200) with a control device (201), cause the printer to execute a method of producing a dental object (100), comprising the steps of:
- printing (S101) a substructure (103);
- printing (S102) an intermediate layer (105) from a support material (109) on the substructure (103); and
- printing (S103) the dental object (100) from the production material (107) for the dental object (100) on the intermediate layer (105), **characterized in that** the support material (109) comprises a water-soluble support material, a wax and/or a non-ionic surfactant and a shape of a recess (111) in the dental object (100) corresponds to the shape of the substructure (103).

## Revendications

1. Procédé de fabrication d'un objet dentaire (100), comprenant les étapes suivantes :
- l'impression (S101) d'une structure de base (103) ;
- l'impression (S102) d'une couche intermédiaire (105) dans un matériau de support (109) sur la structure de base (103) ; et
- l'impression (S103) de l'objet dentaire (100) à partir du matériau de fabrication (107) destiné à l'objet dentaire (100) sur la couche intermédiaire (105),
**caractérisé en ce que** le matériau de support (109) comprend un matériau de support hydrosoluble, une cire et/ou un tensioactif non ionique ;
la forme d'un évidement (111) dans l'objet dentaire (100) correspond à la forme de la structure de support (103) ; et
après l'impression, le matériau de support (109) pénètre dans l'objet dentaire (100) et/ou l'objet dentaire (100) est fritté conjointement avec la structure de support (103).

2. Procédé selon la revendication 1, où le matériau de fabrication (107) de l'objet dentaire (100) comprend un matériau céramique à base d'oxyde.

3. Procédé selon l'une des revendications précédentes, où l'épaisseur de la couche intermédiaire est comprise entre 0,05 mm et 2 mm.

4. Procédé selon l'une des revendications précédentes, où la structure de support (103) est imprimée avec une cavité interne (113).

5. Procédé selon la revendication 4, où la cavité (113) de la structure de support (103) est remplie de matériau de support (109).

6. Procédé selon la revendication 4 ou 5, où l'épaisseur de la paroi de la structure de base (103) entourant la cavité (113) est comprise entre 1 mm et 3 mm.

7. Procédé selon l'une des revendications précédentes, où la structure de base (103) est imprimée avec une interface d'outillage.

8. Procédé selon l'une des revendications précédentes, où la structure de support (103) est imprimée à partir du matériau de fabrication (107) destiné à l'objet dentaire (100).

9. Procédé selon l'une des revendications précédentes, où le matériau de support (109) est retiré après l'impression.

10. Procédé selon l'une des revendications précédentes, où le matériau de support (109) est fondu après l'impression.

11. Imprimante (200) destinée à mettre en œuvre un procédé de fabrication d'un objet dentaire (100), comprenant les étapes suivantes :
- l'impression (S101) d'une structure de base (103) ;
- l'impression (S102) d'une couche intermédiaire (105) dans un matériau de support (109) sur la structure de base (103) ; et
- l'impression (S103) de l'objet dentaire (100) à partir du matériau de fabrication (107) destiné à l'objet dentaire (100) sur la couche intermédiaire (105), **caractérisé en ce que** le matériau de support (109) comprend un matériau de support hydrosoluble, une cire et/ou un tensioactif non ionique, et correspond à la forme d'un évidement (111) dans l'objet dentaire (100) ayant la forme de la structure de base (103).

12. Programme informatique comprenant des instructions qui, lors de l'exécution du programme informatique par une imprimante (200) équipée d'un dispositif de commande (201), amènent celle-ci à exécuter un procédé de fabrication d'un objet dentaire (100), comprenant les étapes suivantes:
- l'impression (S101) d'une structure de base (103) ;
- l'impression (S102) d'une couche intermédiaire (105) dans un matériau de support (109) sur la structure de base (103) ; et
- l'impression (S103) de l'objet dentaire (100) à partir du matériau de fabrication (107) destiné à l'objet dentaire (100) sur la couche intermédiaire (105), **caractérisé en ce que** le matériau de support (109) comprend un matériau de support hydrosoluble, une cire et/ou un tensioactif non ionique, et est conçu pour épouser la forme d'un évidement (111) dans l'objet dentaire (100) correspondant à la forme de la structure de base (103).
